# EUROPEAN PATENT APPLICATION

(11) **EP 4 378 907 A1**
(43) Date of publication of application: **05.06.2024**
(21) Application number: 22210628.8
(22) Date of filing: 30.11.2022
(51) Int. Cl.: C04B 18/06, C04B 18/08, C04B 18/167, C04B 28/02, C04B 28/04, C04B 28/06

(54) **COMPOSITE BINDER HARDENING BY CARBONATION**

(71) Applicant: Heidelberg Materials AG, 69120 Heidelberg (DE)
(72) Inventor: ZAJAC, Maciej, 69120 Heidelberg (DE)
(74) Representative: Zellentin & Partner mbB Patentanwälte

(57) **Abstract**

Use of carbonated calcium rich waste material to make composite binders adapted to harden by carbonation comprising from 5 to 75 wt.-% carbonated calcium rich waste material and from 20 to 95 wt.-% of at least one calcium silicate with the sum of their amounts ranging from 50 to 100 wt.-% of the composite binder and method for manufacturing building materials adapted to harden by carbonation comprising: providing a carbonated calcium rich waste material, mixing the carbonated calcium rich waste material with at least one calcium silicate to provide a composite binder comprising from 5 to 75 wt.-% carbonated calcium rich waste material and from 20 to 95 wt.-% calcium silicate(s) with the sum of their amounts ranging from 50 to 100 wt.-% of the composite binder, and mixing the composite binder with water and optionally further components to provide the building material.

## Description

The present invention relates to a use of carbonated calcium rich waste material as smart filler in composite binders hardening by carbonation, a method of manufacturing building materials hardening by carbonation and a composite binder comprising carbonated calcium rich waste material and one or more calcium silicate(s) as well as to a method for building using the composite binder.

The recent development in the cement and concrete industry is determined by sustainability considerations. These are mostly focused on the urgent need to decarbonize the cement industry. The most relevant large-scale CO₂ abatement measure is the post-production carbon capture and storage (CCS) or utilization (CCU). Carbon capture technologies such as amine-based CO₂ scrubber, membrane-based gas separation, oxyfuel kiln lines or indirect calcination of the calcium carbonate are needed for the CCS to work efficiently. Although the storage of CO₂ has several social and technical constrains, it still is a promising short-term solution for the cement industry. Nonetheless, the pursuit of the alternative solutions is ongoing and a particular focus is on CCU solutions. The CO₂ captured from the cement industry can be used e.g. for the food industry or during the oil recovery. However, the volume of the CO₂ gases currently used for these applications is significantly lower compared to the volume of the CO₂ emitted during the cement production. Consequently, alternative solutions are needed.

Several suggestions to bind CO₂ in concrete are also known. For example, US 2014/0197563 A1, US 2016/0280598 A1, and US 2019/0077045 A1 propose to introduce CO₂ in freshly made concrete paste to generate carbonates and/or hydrogen carbonates (abbreviated (hydrogen)carbonates herein) or to admix previously made (hydrogen)carbonates. Thereby, CO₂ is sequestered and properties of the concrete like strength development are said to be improved. These cements harden by hydration, so the capacity for CO₂ sequestration is limited. US 2012/0082839 A1 discloses building materials comprising sequestered CO₂ made from a composition comprising (hydrogen)carbonate components. The document describes a confusing multitude of variants so that it is not clear how hardening shall proceed, by hydration or by dissolution and precipitation of the (hydrogen)carbonate components.

Additionally, binders hardening by carbonation have been proposed, e.g. in US 2011 /0165400 A1, US 2012/0312194 A1, and WO 2016/022485 A1. Further, the mechanism of calcium silicates carbonation has been studied, see e.g. M. Zajac et al., "CO2 mineralization of Portland cement: towards understanding the mechanisms of enforced carbonation", J. CO2 Utilization 38 (2020) 398-415. In this study, the addition of carbonated clinker had limited impact on the kinetics, an acceleration was only found at the very early times of carbonation. These proposals provide progress but there is an ongoing need for improved methods and products, procedural problems are not really solved. The known binders and methods require a substantial CO₂ concentration and/or thin parts to provide appreciable hardening within adequate time.

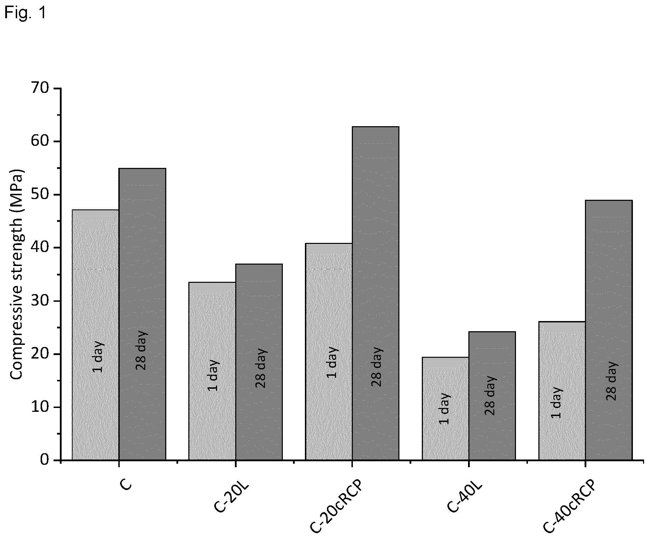

It was now surprisingly found that composite binders in which carbonated recycled concrete paste (abbreviated cRCP herein) or a similar carbonated calcium rich waste material is combined with Portland cement or another calcium silicate have an accelerated compressive strength gaining during carbonation hardening. They also show an improved strength development during a post carbonation curing when the calcium silicate is hydraulic. Concurrently, they allow reducing the environmental footprint of the concrete considerably when CO₂ from off-gas is used to make cRCP and for hardening. Figure 1 shows that when cRCP is used as a binder component, the compressive strength of the carbonation hardened mortars is significantly higher compared to that of mortars based on composite binders with limestone, which is the most popular mineral addition to produce composite cements.

Thus, the above problem can be solved by using a carbonated recycled concrete paste or comparable carbonated calcium rich waste material to produce composite binders that are used for concretes hardening by carbonation. Hence, the present invention provides a use of carbonated calcium rich waste material to make composite binders adapted to harden by carbonation comprising from 5 to 75 wt.-% carbonated calcium rich waste material and from 20 to 95 wt.-% of at least one calcium silicate with the sum of their amounts ranging from 50 to 100 wt.-% of the composite binder. The invention also solves the problem by a method for manufacturing building materials adapted to harden by carbonation comprising: providing a carbonated calcium rich waste material,
mixing the carbonated calcium rich waste material with at least one calcium silicate to provide a composite binder comprising from 5 to 75 wt.-% carbonated calcium rich waste material and from 20 to 95 wt.-% calcium silicate(s) with the sum of their amounts ranging from 50 to 100 wt.-% of the composite binder, and mixing the composite binder with water and optionally further components to provide the building material.

The main advantages of the invention are:
- Significant sequestration potential of CO₂, e.g. CO₂ sequestration from cement plant stack.
- Possible utilization of the CO₂ released in the calcination of limestone during the production of cement clinker.
- The CO₂ is bound in the thermodynamically stable calcite, i.e. this is a safe solution avoiding re-emission of CO₂ during the service life of the concrete elements and after the service life.
- Acceleration of the pre-cast concrete production and optimization of the pre-cast elements performance, when compared to the traditional production process and simple carbonation hardening.

Herein, carbonation designates a reaction with carbon dioxide resulting in compounds that comprise carbonate and/or hydrogen carbonate ions in their structure. Natural carbonation is a carbonation taking place upon contact with air. Usually, natural carbonation does not contribute to the carbonation of calcium rich waste materials like concrete demolition waste or hardening of a cement by carbonation in a significant amount. Due to the very low CO₂ content in air the times would be much too long to be useful. This is also the case for the composite binders according to the invention.

Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise. To simplify the description the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SO₃.

Cement designates a material that, after mixing with an aqueous liquid to form a paste, is able to develop mechanical strength by hydraulic reaction. Thus, cement mostly denotes a clinker ground with or without further components, and also mixtures like super sulphated cement, geopolymer binder, and hydraulic materials not obtained by sintering like a dicalcium silicate obtained by hydrothermal treatment. Composite cement means a mixture containing cement and a supplementary cementitious material and/or filler.

A supplementary cementitious material (SCM) is defined as a pozzolanic and/or latent hydraulic material useful to replace a part of the clinker in a cement. Latent hydraulic materials have a composition that allows hydraulic reaction upon contact with water, wherein typically an activator is needed to enable hydraulic hardening within technically feasible times. Activator means a substance that accelerates the hydraulic hardening of latent hydraulic materials. It can be an addition like sulfate or calcium hydroxide or calcium oxide and/or products of the hydraulic reaction of the ground clinker, e.g. calcium silicates liberate calcium hydroxide during hydraulic hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not hydraulically reactive or only slightly reactive materials like limestone that substantially do not take part in the hydraulic reactivity have to be clearly differentiated from SCM, with which they are sometimes summarized as mineral additions.

Composite binder designates a mixture adapted to harden by carbonation comprising at least one carbonated calcium rich material and one or more calcium silicate(s). A hydraulic reaction after contact with water may take place but usually not before carbonation treatment started and possibly not at all. A composite binder can contain further components, such as but not limited to one or more SCM. Herein, latent hydraulic materials and especially pozzolanic SCM can also be (mainly) not reactive additions. Depending on the specific composition of the composite binder or building material there may or may not be substances available that activate, i.e. accelerate, a hydraulic reaction of latent hydraulic materials. Pozzolans "only" need calcium ions which are present during carbonation hardening, so a pozzolanic reaction is possible in principle, but it might be too slow.

A cement, composite cement or composite binder is usually used adding water or another aqueous liquid to form a paste. Mostly, aggregate is also added. Typically, admixtures and/or additives known as such are added to the cement or binder and/or to the paste.

Building material means a wet mixture that is able to harden by carbonation or by carbonation and hydration and comprises a composite binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks. In contrast, hydraulically hardening building material designates a wet mixture that is able to harden by hydration (i.e. reaction with water) and comprises a cement or composite cement.

Building structure denotes the hardened building material, e.g. a pre-cast concrete element or a floor/ceiling or a bridge part from cast in place concrete.

According to the invention a carbonated calcium rich waste material is used to manufacture a composite binder adapted to harden by carbonation by combining it with at least one calcium silicate. Such a composite binder has a huge CCU potential because it contains a first significant amount of carbon dioxide stored in the carbonated calcium rich waste material and sequesters an additional significant amount of carbon dioxide for hardening.

The carbonated calcium rich waste material typically has a calcium content determined by thermogravimetry of at least 10 wt.-% calculated as CaO, preferably from 10 to 80 wt.-%, more preferred from 15 to 75 wt.-%, most preferred from 20 to 70 wt.-%. In addition the carbonated calcium rich waste material can also contain magnesium. Useful amounts of MgO, determined by thermogravimetry, range from 10 to 80 wt.-%, more preferred from 15 to 75 wt.-%, most preferred from 20 to 70 wt.-%. MgO can also replace some of the CaO, for example up to half of the CaO can be replaced by MgO, preferably up to 40 % CaO can be replaced by MgO and most preferred up to 30 % CaO. Typically, carbonated recycled cement paste, carbonated slags, and carbonated ashes having suitable calcium content, and mixtures of two or more thereof can be used as the carbonated calcium rich waste material. Preferably, cRCP and/or carbonated crystalline blast furnace slag are used, most preferred cRCP. Thus, the composite binder avoids using natural calcium carbonates and calcium carbonate rich materials like limestone or dolomite. While it is technically possible to use such natural materials in addition, this is not preferred and typically, if at all, only small amounts are used like up to 5 wt.-% or up to 1 wt.-% in the composite binder.

The carbonated calcium rich waste materials are either available as product from other processes, e.g. decarbonation of exhaust gas with recycled concrete paste, or a calcium rich waste material is obtained and carbonated in a way known as such. In both cases the carbonated calcium rich waste material is derived from an alternative material source, saving natural resources and allowing an added value use of a waste or by-product. Numerous proposals for carbonation of recycled cement paste have been made, see e.g. EP 3 498 681 A1, EP 3 581 257 A1, EP 3 656 750 A1, EP 3 750 619 A1, EP 3 778 525 A1, EP 4 059 905 A1, and the references cited in these documents. Those proposals are all useful and can be applied analogously to other calcium rich waste materials to provide the carbonated calcium rich waste material.

Preferably, unpurified CO₂ gas is used for carbonation of the calcium rich waste material, especially exhaust gas from cement plants, lime kilns, power plants and other industrial plants emitting carbon dioxide containing off-gas. More preferred carbon dioxide from cement plants is used, most preferred cement kiln off gas and/or exhaust gas from the calcination of limestone. It is noted that the carbon dioxide contained in air is not sufficient for carbonation, since its concentration is much too low. A lower limit of 1 Vol.-%, preferably of 3 Vol.-%, most preferred of 5 Vol.-% is typically aimed at to ensure appreciable carbonation rates.

The particle size distribution of the carbonated calcium rich waste material measured by laser diffraction spectrometry acc. to ISO 13320 preferably has a d₉₀ < 250 µm, more preferred a d₉₀ < 200 µm and most preferred a d₉₀ < 150 µm.

A preferred carbonated calcium rich waste material is cRCP. The carbonated or not carbonated recycled cement paste is typically a by-product of manufacturing recycled concrete aggregate from concrete demolishing waste. Treatment of the waste usually comprises crushing, extracting foreign materials (e.g. wood, metal, plastic, etc.), grinding and sieving/classifying to separate the coarse fraction comprising the aggregate from the fine fraction comprising RCP and fine aggregate as well as comminuted aggregate particles. It is also possible to use concrete waste like residues in the washing water from cleaning concrete mixing devices and tools for placing concrete as well as discarded paste. The exact distribution and composition of the RCP depends on the waste and the conditions used in the treatment. Typically, cRCP with up to 70 wt.-% fine aggregate, preferably up to 50 wt.-% fine aggregate, and most preferred up to 30 wt.-% fine aggregate, will be used when the carbonated calcium rich waste material is cRCP. If desired/needed, separation of RCP and aggregate is mostly achieved by a separation according to size, e.g., sieving, classifying, filtering, or by centrifugation before the carbonation. Detaching RCP from the aggregate can be enhanced by simultaneous application of attrition forces and carbonation as described e.g., in US 2015/0210594 A1, US 2016/0046532 A1 and EP 3 744 700 A1, and/or by electric pulse fragmentation techniques, e.g. as described in not yet published EP21188485.3.

When other calcium rich waste materials like slags and/or ashes having suitable calcium content are used as the calcium rich waste material they comprise the not carbonatable phases in amounts up to 80 wt.-%, preferably up to 70 % wt.-%, most preferred up to 60 wt.-%.

Preferred slags are steel slags. Steel slags are usually classified according to the type of furnace in which they are produced. The properties of the slag depend on the type of process used to produce the crude steel, the cooling conditions of the slag and the valorization process. In the primary process, crude steel is produced in two ways. In the first method, the iron is produced from ore in the blast furnace, thus, generating blast furnace slag. Basic oxygen furnace slag is produced in the steelmaking process by using the molten iron coming from the blast furnace. In the second method, slags are generated in the scrap-based steel industry. The first stage of the scrap-based steel industry production generates electric arc furnace slag and a second stage is performed to refine the molten steel generating ladle furnace slag. This slag is the result from steel refining and, therefore, it is generally a heavy metal carrier such as chrome, lead or zinc. Table 7.1 from www.sciencedirect.com/topics/engineering/steel-slag, reproduced here as table 1, shows the following characteristics of the main slag types generated by the crude steel industry:

**Table 1 (amounts of the oxides in wt.-%)**

| slag | | air cooled slag | blast furnace slag | Basic oxygen furnace slag | Electric arc furnace slag I | Electric arc furnace slag II | Ladle furnace slag |
|---|---|---|---|---|---|---|---|
| com-position | CaO | 30-45 | 30-45 | 30-50 | 40-50 | 20-40 | 35-60 |
| | SiO₂ | 30-40 | 30-40 | 10-15 | 25-30 | 10-20 | 5-50 |
| | Al₂O₃ | 10-15 | 10-15 | 1-3 | 2-10 | 2-10 | 1-30 |
| | MgO | 5-15 | 5-15 | 5-15 | 3-10 | 5-15 | 4-18 |
| | Fe (total) | 0-1 | 0-1 | 10-30 | 0-2 | 20-40 | 0-5 |
| | SO₃ | 0-2 | 0-2 | 0.1-0.3 | 0-2 | 0.1-0.5 | 0-3 |
| | MnO | 0-1 | 0-1 | 1-5 | 1-3 | 2.5-5 | 0-2 |
| | TiO₂ | - | - | 0.5-2 | 0-1 | 0.5-1 | 0-3 |
| | P₂O₅ | 0-0.1 | 0-0.1 | 1-3 | - | 0.5-2 | 0-0.5 |
| | Free CaO | - | - | 2-10 | - | 0.5 | 0.5-20 |
| Density (g/cm³) | | 2.5 | | 3.3 | | 3.5 | 2.6 |
| Processing | | Slow cooling (air cooled), crushing, sieving | Rapid cooling (water cooled), gridding (100 µm) | Slow cooling, crushing, sieving | Slow cooling, crushing, sieving | Slow cooling, moistened, crushing, sieving | Slow cooling, moistened, crushing, sieving |
| Application | | Concrete and road aggregate | Cement, concrete addition | Concrete and road aggregate | Cement addition and concrete | Concrete and road aggregate | pH stabilizer, roads, cement |
| Main properties | | Crystalline, density, strength | Vitreous, hydraulic | Crystalline, strength, high skid resistance | Crystalline, strength, high skid resistance | Crystalline, strength, dense, high skid resistance | Crystalline |

The slags can also differ in their amorphous content which mainly depends on the cooling procedure used. Ground granulated blast furnace slag is useful as SCM in composite cements when it fulfills several conditions defined in standards. It is obtained by rapid cooling to prevent crystallization. Crystalline slags or ones with an amorphous content below 66 wt.-% are usually not suitable as SCM. Those can be advantageously used according to the invention, because carbonation is able to transform them in such a way that they act as smart filler accelerating carbonation of the calcium silicate(s).

Additionally, other slags arising in the future will be useful as calcium rich waste material, provided they have a suitable carbonatable calcium or calcium and magnesium content. It is envisaged that material from processes like: H₂-based direct reduction of iron, biomass-based ironmaking with CCUS, suspension ironmaking, plasma direct steel production, and electrolytic processes are useful. For details see e.g.: https://www.google.com/url?sa=t&rct=j&q=&esrc=s&source= web&cd=&ved=2ahUKEwj81uKBgtX6AhUPhvOHHd-0AgsQFnoECA4QAQ&url= https%3A%2F%2F and www.rolandberger.com%2Fpublications%2Fpublication _pdf%2Frroland_berger_future_of_steelmaking.pdf&usg=AOvVaw2YJAHID9XFs W8xjRhagaOq.

Preferred ashes are fly ashes. Fly ashes are produced in burning processes, especially in coal fired power plants, where they are separated from the exhaust gas by filters. According to ASTM C618, two classes of fly ash are specified: Class F is usually produced by burning anthracite or bituminous coal and class C is normally produced by burning sub-bituminous or lignite coal. Wide ranges exist in the content of the four principal constituents: SiO₂ (25 - 60 wt.-%), CaO (1 - 35 wt.-%), Al₂O₃ (10 - 30 wt.-%) and Fe₂O₃ (5 - 25 wt.-%). If the sum of SiO₂, Al₂O₃, and Fe₂O₃ is 70% or greater the fly ash is technically considered as class F. This lower limit must be covered also by all ashes incorporated in EN 450-1, dealing with ashes in concrete. These ashes, where compounds as Al₂O₃•SiO₂ and 3Al₂O₃•2SiO₂ are predominant, are reported also as low calcium fly ashes showing pozzolanic properties. In the case of class C fly ashes, which in general contain significant percentages of calcium compounds, the sum of SiO₂, Al₂O₃, and Fe₂O₃ is only required to be greater than 50 wt.-%. The fly ashes can originate from different combustion technologies and combustion of different materials or co-combustion. Other ashes like fly ashes and bottom ashes from co-combustion, ashes from co-processing, fly ashes and bottom ashes from municipal waste incineration etc. are also useful provided they contain enough carbonatable calcium or calcium and magnesium.

As mentioned, it is also possible to mix two or more carbonated calcium rich waste materials and/or of two or more calcium rich waste materials before their carbonation to provide the carbonated calcium rich waste material as component of the composite binder. Of course, also different RCPs or slags or ashes can be mixed with each other before or after carbonation. For example, cRCP can be obtained from a mixture of recycled concrete wastes/recycled concrete pastes or carbonated steel slag from a mixture of blast furnace slags from different sites and/or with differing amorphous content. Without wishing to be bound by this theory it is believed that the carbonated calcium rich waste material is not participating in the carbonation reaction, i.e. it does not perceptibly dissolve. Instead it acts as a smart filler accelerating the carbonation of the calcium silicate(s) and the precipitation of the carbonation products as well as by filling the hardened matrix of carbonates.

The composite binder comprises at least one calcium silicate as second component. The term calcium silicate(s) is used herein to designate one calcium silicate or two or more calcium silicates. The one or more of the calcium silicate(s) can contain other ions and/or further phases including impurities. Carbonation of the building material made with the composite binder, e.g. a fresh concrete, relies on the fact that the calcium silicate phases react easily with dissolved CO₂. CO₂ curing also activates calcium silicates that are normally not hydraulically active (e.g. γ-C₂S, C₃S₂, and CS, i.e. γ-belite, rankinite and wollastonite, respectively). Generally, the calcium silicate(s) should have a Ca/Si molar ratio from 0.8 to 3.5. Usually, materials with a combined amount of CaO and SiO₂ of at least 70 wt.-% are suitable, determined with X-ray fluorescence (XRF) and calculated for a loss on ignition at 950 °C free basis. Preferably the combined amount of CaO and SiO₂ is at least 70 wt.-%, more preferred at least 75 wt.-%, most preferred at least 80 wt.-%. Pure calcium silicate(s) are technically possible but have no advantage over industrial and waste materials. Further, an MgO content from 0 - 10 wt.-% and/or an Al₂O₃ and/or Fe₂O₃ content preferably lower than 30 wt.-%, more preferred lower than 25 wt.-% and most preferred lower than 20 wt.-% can be advantageous. Thus, useful calcium silicate(s) include industrial or natural materials containing minerals like alite (C₃S), belite (C₂S) rankinite (C₃S₂) or wollastonite (CS). Furthermore, the calcium silicate(s) may contain CsA, C₁₂A₇, CA, C₄AF, CF, bredigite, anhortite, gehlenite and several other phases containing magnesium, alumina, calcium and silica. These can be classified according to the Ca/Si ratio in three basic groups:
(i) Wollastonite and Rankinite type systems with Ca/Si of approximatively 1.5 and lower. These phases are not hydraulic.
(ii) Belite type systems with Ca/Si of approximatively 2, with significant difference between β-C₂S and γ-C₂S, wherein γ-C₂S is considered as not a hydraulic phase, while β-C₂S reacts slowly with water.
(iii) Portland clinker-based systems that are dominated by alite (C₃S) with Ca/Si of approximatively 3.

One preferred example of suitable calcium silicate(s) are hydraulic cements or clinkers, for example but not limited to Portland cement, Portland composite cements, belite cements, belite - sulfoaluminate - ye'elimite cements, and binders based on alternative materials like steel slags. Additionally, non-hydraulic calcium silicate(s) can preferably be used, e.g. but not limited to, wollastonite or rankinite. Preferred are Portland cement, Portland composite cements, and non-hydraulic calcium silicates like wollastonite and rankinite, most preferred is Portland cement.

Portland composite cements are those defined e.g. in the EN 197-1 and 197-5 standards. Preferably, the clinker replacement ratio in composite cements used as calcium silicate(s) is limited to 50 wt.-% of the clinker.

The composite binder is obtained by mixing the carbonated calcium rich waste material and the calcium silicate(s) in any manner known as such. Useful is for example co-grinding in open or closed-circuit units equipped with e.g. ball mills with or without separator, vertical roller mills or other known grinding devices. Also, known grinding additives can be used. The composite binder contains from 5 to 75 wt.-% carbonated calcium rich waste material, preferably from 7 to 70 wt.-%, more preferred from 10 to 60 wt.-%, most preferred from 15 to 50 wt.-%, with respect to the total weight of the composite binder. The composite binder contains from 20 to 95 wt.-% calcium silicate(s), preferably from 30 to 80 wt.-%, more preferred from 40 to 70 wt.-%, most preferred from 50 to 60 wt.-%, with respect to the total weight of the composite binder. The combined amount of carbonated calcium rich waste material(s) and calcium silicate(s) in the composite binder ranges from 50 to 100 wt.-%, preferably from 65 to 100 wt.-%.

It is also possible to add further components, for example but not limited to admixtures, additives, and supplementary cementitious materials. Naturally, the sum of all components in a specific binder is 100 wt.-%. Thus, in case the composite binder consists of carbonated calcium rich waste material(s) and calcium silicate(s) their amounts add up to 100 wt.-% and the sum of their amounts is lower when the binder contains further components.

Admixtures are only added to the paste as a rule, but can also be added to the composite binder or a component thereof. Admixtures are used to optimize the properties of the building material like setting time, hardening time, spread, viscosity and homogeneity as well as to impart desired properties to the final product, e.g. a concrete part, like strength, flexural modulus, freeze-thaw-resistance and many more. These admixtures are known per se and are used in their usual amounts. At least admixtures like water reducing agents, plasticizers and super plasticizers to adjust consistency while keeping the w/b in the range suitable for providing pores allowing carbonation are typically contained. Useful water reducing agents, plasticizers and super plasticizers are for example, but not exclusively, organic compounds with one or more carboxylate, sulfonate, phosphonate, phosphate or alcohol functional group. Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acid and their salts, phosphonates, and sugars (saccharides). Furthermore, it is possible to use admixtures that improve the concrete durability performance like air entraining or hydrophobic agents.

Special admixtures can be added in order to improve the dissolution of the carbonate ions in the interacting solutions and consequently to accelerate the carbonation process. These can be alkanolamines, e.g. primary amines like monoethanolamine and diglycolamine, secondary amines like diethanolamine and diisopropanolamine, and tertiary amines like methyldiethanolamine and triethanolamine, or mixtures of two or more of them or other substances that can be used for improving CO₂ dissolution in the solution. Additionally, enzymes such as carbonic anhydrase can be used to enhance carbonation efficiency and modify the properties of the carbonation products.

It is also possible to add admixtures that modify the morphology of the precipitating calcite during the carbonation processes. This provides the advantage of building less dense shales of carbonates product and enables higher carbonation degrees. Suitable are for example magnesium salts, polyacrylicacid, polyacrylamide, polyvinylalcohol, polyvinyl sulfonic acids, styrene sulfonate, citric acid and other organic acids, polysaccharides and other substances, e.g. phosphonates, polycarboxylates.

Moreover it is possible to add admixtures that regulate the pH during the carbonation process in order to enhance the precipitation of the carbonates, these include metal hydroxides and carbonates and similar substances.

Admixtures that influence the carbonation can be added to the composite binder, to the building material obtained by its mixing with water or another aqueous liquid, to components of the composite binder, to components added to the composite binder at the time of mixing it with water or another aqueous liquid, and/or to the calcium rich waste material for its carbonation. The same or different admixtures and more than one can be added in each instance.

Further, additives are often used in building materials like concrete such as but not limited to fillers, pigments, polymers, and fibers. These can also be added to the composite binder or only to the composite binder. Fillers are added to increase strength, including early strength, and raise particle packing density. Typical fillers are limestone and other stone dust, but other materials of adequate fineness and durability are also useful. Also micro silica and fumed silica are useful, they are conventionally considered filler although they show a pozzolanic reaction. Pigments and colorants provide desired aesthetics and can also be added to a layer or the surface of a concrete part. Polymers and fibers increase flexural modulus and crack resistance. The amount of additives is very variable and depends on the specific additive. The known amounts are used.

SCMs can be added either as component of the calcium silicate(s) or as component of the composite binder or later when mixing with water or aqueous liquid to form the building material. The known SCM are useful, i.e. both latent-hydraulic materials and pozzolanic materials. For example, but not limited to, natural pozzolans like trass, calcined clay, hyaloclastite and other volcanic glasses, ground granulated blast furnace slag, other slags, fly ashes, other ashes, and mixtures of two or more of those. Such SCM can be added in amounts from 1 to 50 wt.-%, preferably from 2 to 40 wt.-%, most preferred from 5 to 30 wt.-%, with respect to the total composite binder weight.

The particle size distribution determined by laser granulometry of the binder usually conforms to a D₉₀ below 0.5 mm, preferably below 200 µm and most preferred below 110 µm, typically with a Rosin-Rammler slope n from 0.5 to 1.4.

Usually, the composite binder is used to make a building material such as but not limited to mortar, screed, or concrete. For this, the composite binder is mixed with water or another aqueous liquid to obtain a paste. Useful water (or aqueous liquid) to binder weight ratios (abbreviated w/b) range from 1 to 0.05, preferably from 0.7 to 0.1, and most preferred from 0.5 to 0.15 and are adapted to the building material requirements as known per se. In case the binder comprises one or more supplementary cementitious materials (either as added component or because the calcium silicate(s) comprise a composite cement), those are included into the amount of cement for calculating the w/b.

Typically, also aggregates are added, the amount and size of which is adjusted to the intended use according to general knowledge in the art. Aggregate can be any aggregate known as such. Normally sand and/or gravel of selected particle sizes is/are used. In some embodiments lightweight aggregate is used, typically as part of the aggregate but also as sole aggregate. The aggregates can be partly or solely recycled aggregates.

Often, also admixtures and/or additives as described before are added only or additionally to the paste.

These steps of building a building structure are analogous to the use of known cements like Portland cement. In contrast to those hydraulically hardening cements, the composite binder obtained according to the invention hardens by carbonation, i.e. a reaction of calcium ions provided by the composite binder with CO₂ to form different carbonates. These can be crystalline or amorphous carbonates including the hydrated forms of carbonates. A - usually minor - amount of phases that react with water in a hydraulic reaction may be present, but strength development is not based on them. The composite binder is adapted to gain strength predominantly or exclusively by carbonation, at least for the first 24 - 48 hours of hardening. Using hydraulic calcium silicate(s) or other hydraulic/latent-hydraulic components in the composite binder advantageously enables an additional gaining of strength during a post-carbonation curing. As mentioned, the composite binder can also harden solely by carbonation.

For carbonation hardening of the composite binder unpurified CO₂ gas can be used, since the technology allows a CO₂ concentration from 5 to 99 Vol.-%. Furthermore, the hardening may be conducted at variable CO₂ concentrations, e.g. starting with lower concentration and increasing it in the course of the carbonation hardening or supplementing additional CO₂ from time to time.

Usually, carbon dioxide will be provided in gaseous form. Gases from modified clinker production lines, e.g. oxyfuel kiln lines or indirect calcination of the calcium or magnesium carbonate, or from carbon capture technologies applied or supposed to be applied in the cement industry, such as amine-based CO₂ scrubber, membrane-based gas separation, are preferably used to supply CO₂ in the method according to the invention.

Preferred conditions for the carbonation are:
- a CO₂ concentration in the gas from 1 to 99 Vol.-%, preferably from 5 to 95 Vol.-%, most preferred from 10 to 50 Vol.-%
- a time of addition/interaction from 1 h to 100 h, preferably from 2 h to 50 h, most preferred from 3 h to 24 h
- a relative humidity (abbreviated RH) from 10 to 100 %, preferably from 20 to 90 %, most preferred from 30 to 70 %
- a temperature in the range from 0 to 99 °C, preferably from 10 to 90 °C, most preferred from 20 to 85 °C
- a pressure from ambient pressure up to an increased pressure of 50 bar absolute, preferably from ambient pressure to 5 bar absolute or 2 bar absolute.

The carbonation usually takes place in a closed chamber to provide/assure the conditions described above. For example a box can be used for batch processing. For continuous processing a system equipped with several locks is useful, e.g. a device analogous to what is used for the autoclave in sand-lime brick production, see e.g. https://www.masa-group.com/en/products/sand-lime-brick-production/.

After carbonation a post carbonation curing can follow and preferably does follow when hydraulic components are present. The post carbonation curing can be conducted at ambient conditions or at increased temperature. Typically, the following conditions are applied for post carbonation curing:
- a time of addition/interaction from 1 d to 100 d, preferably from 7 to 95 days and most preferably from 28 to 90 days
- a relative humidity from to 100 %, preferably from 30 to 99 % and most preferably from 50 to 99 %,
- a temperature in the range from -20 (storage in winter) to 80 °C, preferably from 0 to 70 °C and most preferably from 10 to 60 °C.
Alternatively, a post carbonation curing under water is possible.

The building structure obtained by carbonation hardening and optionally also post carbonation curing has the same or similar mechanical properties as a structure from e.g. Portland cement or Portland composite cement. In other words, the composite binder according to the invention can replace known cements and reduce the carbon dioxide footstep of building enormously. Apart from carbonation hardening the manufacturing and mixing proceeds analogously to usual hydraulic cements. Especially aggregate, admixtures, additives etc. can be used in the same way. The building structures to be built are preferably such that can easily be surrounded with an atmosphere suitable for carbonation after casting/placing the building material. Thus, precast concrete parts such as walls, pillars, ductwork etc. or small parts made en masse such as paving stones, are preferred building structures. However, it is also possible to envelope cast-in-place concrete for carbonation curing. Especially when exhaust gas emitted nearby is used a very simply covering with tarpaulins or a transportable housing can be foreseen.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example 1

Synthetic recycled cement paste (provided by hydrating 80 wt.-% CEM I + 20 wt. % quartz for 6 months) was ground and carbonated in a wet reactor at water/solids = 3, using 100 Vol.-% CO₂ gas for 6 hours. The obtained cRCP was dried and ground in a ball mill. Composite binders were prepared using 20 and 40 wt.-% replacement ratio of CEM I by either limestone or the carbonated recycled cement paste. Then mortar samples were prepared from the composite binders using a w/b in the range from approximately 0.3 to approximately 0.4 and compacted by means of a Proctor device. The samples were stored for the first 30 minutes in the laboratory (T = 20 ± 1 °C and RH = 65 ± 10 %) and then carbonated for 23.5 hours (CO₂ concentration = 50 Vol.-%, T = 20 ± 1 °C and RH = 50 ± 10 %). After that compressive strength was measured as prescribed in 197-1. After the carbonation curing, the samples were cured under water at 20 °C and ambient pressure till 28 days, and after that the compressive strength was again measured.

Figure 1 shows the compressive strength of the carbonated mortars at 1 day. L designates limestone and cRCP carbonated recycled cement paste. It is apparent that cRCP showed higher compressive strength at the same replacement level than limestone. Thus, the use of it according to the invention provides higher early strength which is an important property. At the same time, carbonation of the calcium rich waste and even more carbonation hardening of the composite cement according to the invention sequesters considerable amounts of CO₂.

## Claims

1. Use of carbonated calcium rich waste material to make composite binders adapted to harden by carbonation comprising from 5 to 75 wt.-% carbonated calcium rich waste material and from 20 to 95 wt.-% of at least one calcium silicate with the sum of their amounts ranging from 50 to 100 wt.-% of the composite binder.

2. Method for manufacturing building materials adapted to harden by carbonation comprising:
providing a carbonated calcium rich waste material,
mixing the carbonated calcium rich waste material with at least one calcium silicate to provide a composite binder comprising from 5 to 75 wt.-% carbonated calcium rich waste material and from 20 to 95 wt.-% calcium silicate(s) with the sum of their amounts ranging from 50 to 100 wt.-% of the composite binder, and
mixing the composite binder with water and optionally further components to provide the building material.

3. Use according to claim 1 or method according to claim 2, wherein carbonated recycled cement paste, carbonated slag and/or carbonated ash is used as the carbonated calcium rich waste material, preferably carbonated recycled cement paste or carbonated crystalline slag, most preferred carbonated recycled cement paste.

4. Use according to claim 1 or 3 or method according to claim 2 or 3, wherein the carbonated calcium rich waste material contains at least 10 wt.-% calcium calculated as CaO determined by thermogravimetry, preferably from 10 to 80 wt.-%, more preferred from 15 to 75 wt.-%, most preferred from 20 to 70 wt.-%, wherein up to half of the CaO, preferably up to 40 wt.-%, more preferred up to 30 wt.-%, can be replaced by MgO.

5. Use according to one of claims 1 or 3 to 4 or method according to one of claims 2 to 4, wherein the carbonated calcium rich waste material is obtained from a calcium rich waste material by carbonation, preferably by carbonation with exhaust gas from a cement plant or a power plant, most preferred with cement kiln off-gas and/or exhaust gas from a calcination of limestone.

6. Use according to one of claims 1 or 3 to 5 or method according to one of claims 2 to 5, wherein the composite binder contains from 7 to 70 wt.-% carbonated calcium rich waste material with respect to the total weight of the composite binder, preferably from 10 to 60 wt.-%, more preferred from 15 to 50 wt.-%.

7. Use according to one of claims 1 or 3 to 6 or method according to one of claims 2 to 6, wherein a hydraulic cement and/or a non-hydraulic calcium silicate is used as the calcium silicate, preferably one or more of Portland cement, Portland composite cement, belite cement, belite - sulfoaluminate - ye'elimite cement, wollastonite and rankinite, most preferred Portland cement or Portland composite cement.

8. Use according to one of claims 1 or 3 to 7 or method according to one of claims 2 to 7, wherein the composite binder contains from 30 to 80 wt.-% calcium silicate(s) with respect to the total weight of the composite binder, preferably from 40 to 70 wt.-%, most preferred from 50 to 60 wt.-%.

9. Use according to one of claims 1 or 3 to 8 or method according to one of claims 2 to 8, wherein the sum of the amounts of carbonated calcium rich waste material and calcium silicate(s) ranges from 65 to 100 wt.-%.

10. Use according to one of claims 1 or 3 to 9 or method according to one of claims 2 to 9, wherein the composite binder is provided with or ground to a particle size distribution determined by laser granulometry with a D₉₀ below 0.5 mm, preferably below 200 µm and most preferred below 110 µm, and/or with a Rosin-Rammler slope n from 0.5 to 1.4.

11. Composite binder hardening by carbonation comprising from 5 to 75 wt.-% carbonated calcium rich waste material and from 20 to 95 wt.-% calcium silicate(s) with the sum of their amounts ranging from 50 to 100 wt.-% of the composite binder, preferably obtainable or obtained by a use or method according to one of claims 1 to 10.

12. Composite binder according to claim 11, wherein the binder comprises, with respect to the total weight of the composite binder, from 30 to 80 wt.-% calcium silicate(s), preferably from 40 to 70 wt.-%, most preferred from 50 to 60 wt.-%, and/or from 7 to 70 wt.-% carbonated calcium rich waste material, preferably from 10 to 60 wt.-%, most preferred from 15 to 50 wt.-% and/or the sum of the amounts of carbonated calcium rich waste material and calcium silicate(s) ranges from 65 to 100 wt.-%.

13. Composite binder according to claim 11 or 12, wherein the composite binder further comprises a supplementary cementitious material, such as a slag, especially a ground granulated blast furnace slag, an ash, especially a fly ash, a natural pozzolan, especially trass or a volcanic glass, a calcined clay, or two or more thereof, preferably in an amount from 1 to 50 wt.-%, more preferred from 2 to 40 wt.-%, most preferred from 5 to 30 wt.-%, with respect to the total composite binder weight.

14. Composite binder according to one of claim 11 to 13, wherein the composite binder further comprises
one or more admixture(s), especially one or more of water reducing agents, super plasticizers, air entraining agents, alkanolamines, enzymes, substances that modify the morphology of the precipitating calcite during carbonation, and substances that regulate the pH during carbonation, and/or
one or more additive(s), especially one or more of fillers such as limestone, pigments, polymers, and fibers.

15. Method for building a building structure wherein a composite binder according to one of claims 11 to 12 or obtainable by a use or method according to one of claims 1 to 10 is provided, mixed with water or an aqueous liquid, and hardened by carbonation, preferably at a CO₂ concentration from 1 to 99 Vol.-%, and/or for a time from 1 hour to 100 hours, and/or at a relative humidity from 10 to 100 %, and/or at a temperature from 0 to 99 °C, and/or at a pressure from ambient to 50 bar absolute, to provide the building structure.

16. Method according to claim 15, wherein the building structure is subjected to a post carbonation curing, preferably
- for a time from 1 day to 100 days, and/or
- at a relative humidity from 10 to 100 % or under water, and/or
- at a temperature from - 20 °C to 80 °C.
